# EUROPEAN PATENT SPECIFICATION

(11) **EP 2 443 270 B1**
(45) Date of publication and mention of the grant of the patent: **19.01.2022**
(21) Application number: 10726557.1
(22) Date of filing: 18.06.2010
(51) Int. Cl.: C25C 3/00, C25C 3/28, C25C 7/00, C22B 34/12, B01J 19/30

(54) **FEEDSTOCK**
ROHSTOFF
ALIMENTATION

(30) Priority: 18.06.2009 GB 0910565
(43) Date of publication of application: 25.04.2012
(73) Proprietor: Power Resources Group Ltd, London N1 7GU (GB)
(72) Inventor: DUDLEY, Peter, G., South Yorkshire DN5 7AR (GB); WRIGHT, Allen, Richard, Northumberland NE48 4EA (GB)
(74) Representative: Bates, Alan Douglas Henry
(86) International application number: PCT/GB2010/001199
(87) International publication number: WO 2010/146369

(56) References cited:
- EP-A1- 0 092 525
- EP-A1- 1 541 716
- WO-A1-99/64638
- WO-A1-2008/007126
- WO-A1-2008/101290
- AU-B2- 2004 216 659
- US-A- 4 118 292
- US-A- 5 173 173
- US-A1- 2007 182 035

## Description

The invention relates to a feedstock for reduction in an electrolytic cell, in particular a feedstock suitable for electrolytic reduction, for instance to produce a metal, in contact with a molten salt.

### Background

In recent years there has been great interest in the direct production of metal by reduction of a solid feedstock, for example, a solid metal oxide feedstock.

A reduction may be performed, for example, to reduce metal compounds or semi-metal compounds to metals, semi-metals or partially-reduced compounds, or to reduce mixtures of metal compounds to form alloys or intermetallics. In order to avoid repetition, the term metal will be used in this document to encompass all such products, such as metals, semi-metals, alloys, intermetallics and partially-reduced products.

One such reduction process is the Cambridge FFC electro-decomposition process (as described in WO 99/64638). In the FFC method a solid compound, for example a solid metal oxide, is arranged in contact with a cathode in an electrolytic cell comprising a fused or molten salt. A potential is applied between the cathode and an anode of the cell such that the solid compound is reduced. In the FFC process, the potential that reduces the solid compound is lower than a deposition potential for a cation from the molten salt. For example, if the molten salt is calcium chloride then the cathode potential at which the solid compound is reduced is lower than a deposition potential for depositing calcium from the salt.

Other reduction processes for reducing feedstock in the form of cathodically-connected solid metal compounds have been proposed, such as the Polar process described in WO 03/076690. Feedstocks may also be reduced chemically, for example by the electrolytic formation of a reactive metal such as calcium or lithium in a molten salt.

Conventional implementations of the FFC and other electrolytic reduction processes typically involve the production of a feedstock in the form of a preform or precursor fabricated from a powder of the solid compound to be reduced, for example by slip casting. This preform is then painstakingly coupled to a cathode to enable the reduction to take place. Once a number of preforms have been coupled to the cathode, the cathode can be lowered into the molten salt and the preforms can be reduced. (An example of this method of connecting a preform to a cathode is illustrated in WO 03/076690, where a titanium oxide pellet is suspended from the end of a Kanthanal wire cathode.) It can be labour intensive work to produce the preforms and then attach them to the cathode. Although this methodology works well on a laboratory scale, it does not lend itself to the mass production of metal on an industrial scale. The document AU 2004 216 659 B2 relates to improvements in the electrolytic reduction of metal compounds and in particular to improvements in the reduction of titanium dioxide to produce metallic titanium and discloses that sintered granules or powder of metal oxide, particularly titanium dioxide, or semi-metal oxide can be used as the feedstock for the electrolytic reduction. It is an aim of the invention to provide a more suitable feedstock and method for reducing a feedstock.

### Summary of Invention

The invention provides a feedstock, the use of a feedstock, a method of reducing a precursor material and a metallic random packing element as defined by the appended independent claims, to which reference should now be made. Preferred or advantageous features of the invention are defined in dependent sub-claims.

Thus, in a first aspect the invention provides a feedstock for reduction in an electrolytic cell, the feedstock comprising a plurality of three-dimensional elements or preforms. Each element is formed from a material suitable for reduction, i.e. each element is a consumable component that is capable of being reduced within an electrolytic cell. The body of each element may be described as being formed by walls of the material. Each element may have a maximum wall thickness of less than 10mm, with the elements shaped such that a volume of the feedstock, i.e. a volume formed by a plurality of the elements packed together, has between 35% and 90% free space. It may be convenient to refer to the feedstock as having between 35% and 90% free space per cubic metre.

In some specific embodiments the elements may be shaped as rings or portions of rings. In such embodiments it is clear that the elements have a wall thickness, i.e. the thickness of material that makes up the ring. In other embodiments the elements may be formed into complex shapes such as hyperbolic paraboloids or saddle-shapes. In such embodiments the whole element is effectively a single wall and the wall thickness, therefore, is simply the thickness of material. Thus, the term wall thickness as used in this application refers to the thickness of the material making up the feedstock element.

Preferably each three-dimensional element making up the feedstock is shaped to function as a randomly-packable element, preferably such that the feedstock is substantially resistant to nesting and/or orientation. If a volume of the elements are packed randomly then a fluid flow path through the feedstock, due to the free space, remains consistent and predictable. Any orientation of the elements in the feedstock, including local orientation within regions of the feedstock, may result in the fluid flow through the feedstock varying from region to region in an unpredictable manner. It is preferable that a volume of the feedstock does not have any long range alignment.

A feedstock according to the invention may be advantageously used as a consumable, reactive, component in reduction reactions performed in a molten salt (i.e. the feedstock itself reacts to form a reduced product such as a metal). The feedstock will be flooded with a liquid molten salt and, therefore, an open and consistent fluid flow path may provide a number of advantages.

A low resistance to the flow of fluid allows deep beds of feedstock to be provided without significant pressure drop effects over the depth of the bed. A low pressure drop across the depth of a feedstock bed means that any pumping pressure required to maintain a flow of molten salt within the reduction apparatus can be minimised. The ability to reduce beds of greater depth may increase the productivity of any particular reduction process.

A low pumping pressure requirement may save costs and space that would be required for high powered pumping equipment. Low pumping pressure may also help prevent fluidisation of the feedstock, which may be undesirable in some reduction reactions. As an example, a feedstock formed from spherical elements would require a relatively high pressure to maintain a flow of fluid through a bed of the feedstock due to the relatively high resistance to fluid flow. Increasing the pumping pressure, however, may result in the fluidisation of the feedstock rather than an increased flow rate.

During any reduction reaction there are likely to be reaction products that form and are transferred to the fluid surrounding the feedstock. For example, during reduction of a metal oxide feedstock in a molten salt, various oxides may be formed in the molten salt. If these reaction products are not removed from the region surrounding the feedstock then they may adversely affect the progress of the reaction. A feedstock that allows a consistent and predictable fluid flow path through the material during reaction may allow such reaction products to be removed more efficiently.

It is preferred that the feedstock elements are made from a material that substantially retains its shape during reduction. In this way the fluid flow properties of the feedstock are maintained in the reduced product. This may provide the advantage that the bed of reduced feedstock can be swiftly and cleanly drained of fluid after completion of a reduction reaction. Economical recovery of a product is an important part of any industrial process. Thus, the ability to drain a reduced feedstock swiftly and with minimal pooling of fluid within the reduced feedstock is likely to be a great advantage, particularly where the fluid has a high melting point and is solid at room temperature. It must then be washed from the product, rather than simply drained.

In some electrolytic reduction processes the current flow path through a feedstock may be as important to the reduction reaction as flow of fluid through the feedstock, or even more important than flow of fluid to the reduction reaction. For example, if a bed of feedstock is formed to a predetermined depth over the surface of a cathode of a cell (preferably a horizontally-oriented cathode), then for an electrolysis reaction to occur there needs to be a flow of current between the cathode and an anode within the cell. If the feedstock lies in contact with the majority of the cathode (i.e. a high proportion of the surface area of the cathode is in contact with feedstock) then the current flow path between the cathode and the anode will be restricted. Likewise, if the feedstock has a tendency to orient or align then there may be regions within the feedstock that restrict the flow of current.

Preferably there should be a homogenous distribution of current flow paths through all regions of the feedstock. Therefore, it is preferred that the feedstock allows a continuous current flow path between a cathode and an anode, and that the feedstock provides a low resistance to the flow of current. In other words, it is preferred that the feedstock provides a low enhancement of the electrical resistivity across the depth (or width if applicable, for example for feedstock adjacent a vertically-oriented cathode) of, or within, a bed of the feedstock. These aims can be addressed by increasing the free space of a feedstock and ensuring that the feedstock does not settle or align to provide regions of resistance to current flow.

A further advantage that may result from use of a feedstock formed from randomly-packable elements is that the total surface area of a cathode that is in contact with the feedstock may be lower than would result from use of other forms of non-random-packing feedstock. For example, where the feedstock is in direct contact with a cathode, an initial layer of disc-shaped elements of the feedstock would be likely to orient such that they each contact the cathode with one of the disc's faces. This would result in a large area of element-to-cathode contact and reduce the area of cathode available for current flow. Subsequent layers of the disc-shaped elements would also be likely to orient and contact the initial layer of disc-shaped elements with face-to-face contact. This would result in further restriction to the current flow paths. The current flow paths may be completely restricted by covering the surface of a cathode with a feedstock comprising such disc-shaped elements where the thickness of the layer is only a few elements deep.

A feedstock of random-packing elements, on the other hand, would be more likely to contact the cathode at a large number of discrete points (for example, between corners or edges of elements of feedstock and the cathode surface, which is typically planar), thereby leaving a greater area of cathode exposed and available for current flow.

Many shapes cannot be considered to be random-packing shapes or to have randomly-packable properties. For example, if individual elements of a feedstock are tubular and have a length to diameter ratio of, for example, 2:1, then a plurality of the elements will be susceptible to localised ordering or alignment as the individual elements will tend to line up in the same orientation. If a volume of feedstock containing a plurality of such elements becomes ordered or aligned in this way then the fluid flow in one direction (in which the elements lie longitudinally) will be increased due to the lumens of the tubes being aligned, whereas fluid flow in a perpendicular direction will be hindered. Spherical particles too are susceptible to settling into an ordered arrangement that increases their packing density and restricts fluid and/or current flow.

As a further example, if individual elements of a feedstock are formed from a shape such as a truncated conical tube then the elements may be susceptible to nesting. Nesting is a process in which a portion of one element can project into the space within another element and is well known as a way of stacking multiple items such as beakers, traffic cones and chairs. Nesting leads to some regions of feedstock having a higher density than other regions of elements and may also lead to localised orientation of elements within the feedstock.

Thus, examples of shapes that are not randomly packable include elongated tubes, spheres, cubes and cuboids, truncated cones, discs and elongated cylinders. Many of the three-dimensional shapes that we are familiar with do not have randomly-packable properties.

Substantially chemically-inert particles that have randomly-packable properties are currently used as packing in industrial distillation and absorption columns. These prior art random packing particles do not themselves undergo chemical reaction and are used to facilitate gas: liquid contact in industrial processes.

The material forming the walls of the elements is a precursor material that can be reduced in an electrolytic cell. A preferred example may be a metal oxide element for reduction by deoxidation to produce a reduced product or a metallic product.

An aim of using a feedstock according to the invention is to eliminate the need for each individual element of precursor material to be individually mounted or coupled in an electrolytic cell prior to performing a reduction. The use of a feedstock according to the invention may advantageously allow the material to be introduced into an electrolytic cell by the act of dumping or pouring a layer of the desired depth into, or onto, an appropriate portion of the electrolytic cell.

It is known to produce preforms such as granules or pellets of precursor material for subsequent reduction in an electrolytic cell. Such preforms may be poured in a layer within the cell prior to reduction. Such preforms are limited, however, in the size of the preform that can be successfully reduced in an economically viable time and due to problems that may be caused in processing due to the relatively high density of a layer of such preforms. For example, as described above it may be difficult to reduce a bed of granules or pellets having a depth of more than one element in thickness due to restrictions or resistance in the current and/or fluid flow paths through the feedstock.

The elements forming the feedstock of the present invention are shaped such that a volume of the feedstock has a defined free space per m³. This means that, were you to dump or pour a volume of feedstock, for example a cubic metre of the feedstock, into a basket, between 35% and 90% of that cubic metre would be free space. Advantageously, such free space may allow a free flow of liquid through the feedstock. The feedstock will typically be immersed in a molten salt during an electrolytic reduction and the flow of the molten salt through the dumped or poured elements may be important to the speed and efficiency of the feedstock reduction, for example by aiding the removal of any reactive metal oxide that is formed. (As an example, where a calcium chloride salt is used in the reduction process calcium oxide may be formed as a reaction product.) Furthermore, the free space may provide a current flow path through the feedstock, which may be desirable in some types of electro-reduction process.

A volume of feedstock that has been dumped or poured onto a surface, for example onto a cathode surface, or into a space may be termed a dumped feedstock.

It is noted that any porosity within the material that forms each element (for example within the wall or walls of each element) is not considered to form part of the free space of the feedstock. For example, consider two different feedstocks formed by a plurality of elements of identical shape and size. The free space defined by the two feedstocks does not vary if the porosity of the material the elements in each feedstock are formed from is different. If the walls of the elements of one feedstock are formed from a substantially dense material and the walls of the elements making up the other feedstock are formed from a material having 50% porosity, the free space defined by each of the feedstocks is still the same. Thus, the free space defined by a volume of a feedstock is a function of the macroscopic dimensions of the elements making up that feedstock and is invariant to other parameters such as density of the material making up the feedstock. The free space as defined in this application may be referred to as packed free space.

The maximum wall thickness of elements in the feedstock may be greater than 10mm in some circumstances, but it is envisaged that the rate of reduction of elements with greater wall thicknesses may proceed at an uneconomical rate and therefore it is advantageous for the maximum wall thickness for most applications to be less than 10mm.

Likewise, it is possible for elements to be shaped such that the free space is greater than 90%. However, increasing the percentage free space beyond 90% will correspondingly decrease the volume of material per unit volume of feedstock that is available for reduction. Thus, the optimum free space of the feedstock is a trade-off between the desire for optimum fluid flow and/or current flow path through the feedstock and the desire to reduce an economically viable mass of material in each particular cell.

Preferably each element has a thickness or wall thickness of less than 15mm or less than 10mm, for example between 0.25mm and 5mm, preferably between 0.5mm and 3mm, particularly preferably between 1mm and 2mm. As described above, the wall thickness may simply be the thickness of the material that forms the element. Elements with such wall thicknesses may be electrolytically reduced in reasonable time-frames, in a commercial process, as the maximum diffusion path in such materials will be low.

It may be advantageous, particularly where wall thicknesses are towards the upper end of the defined ranges, that the walls which form each element are porous. In other words, the body of material from which the elements are made has porosity. It will be appreciated by those skilled in the art that the following references to porosity refer to open porosity. Such porosity allows penetration of a liquid, for example of a molten salt, into the body of the element whereas closed pores do not. This porosity may reduce diffusion paths within the element and thereby increase reduction rates. It is preferable, therefore, that any porosity is open porosity connecting with a surface of the element.

Where an element making up the feedstock is porous, it is preferable that the porosity is between about 10% and 70%, particularly preferably between 25% and 45%. Such porosity ranges may allow molten salt to infiltrate the body of the elements whilst the elements retain an adequate mechanical strength to undergo reduction without significant breakage.

Preferable values for percentage free space per unit volume of feedstock, preferably dumped or poured feedstock, are between 50% and 80%, preferably between 55% and 75%, and particularly preferably between 60% and 70%. It is noted, for the avoidance of doubt, that any porosity that is present within the body of an element is not counted as part of the free space per unit volume of the feedstock.

It may be advantageous for the feedstock to have a large surface area to volume ratio. Preferably the surface area of the feedstock is between 2000m² and 200m² per m³, preferably between 1500m² and 400m² per m³, particularly preferably between 1000m² and 600m² per m³. The surface areas quoted are the macroscopic surface areas, i.e. microscopic variations in topology and internal surfaces resulting from material porosity are not taken into account. It is likely that in most reactions the rate of reduction at the surface of an element may exceed the rate of reduction within the volume of the element. Thus, by increasing the surface area to volume ratio of the feedstock, the overall rate of reduction may be increased

It is preferable that the feedstock is a feedstock for use in an electro-reduction cell, for example in an electro-reduction cell for reduction according to the FFC process or the Polar process. The feedstock may be used, however, in a chemical reduction process, for example, a reactive metal or a calciothermic reduction process.

It may be advantageous for the elements comprising the feedstock to be formed from a powder material. Many powder processing methods are known and may be used for producing a feedstock according to the invention, for example by pressing, moulding, slip casting, or extrusion. Elements produced by powder processing may be sintered during their production to provide them with the required mechanical strength to act as a feedstock and to also control levels of porosity in the elements within predetermined limits.

The feedstock may be formed from a compound between at least one metal species and a non-metal species. For example the feedstock may advantageously be formed from a metal oxide or mixture of metal oxides or from a mixture of one or more metal oxides and one or more metals. Thus, the elements making up the feedstock may be formed by powder processing of a powder that contains a mixture of metal oxides and metal powder. The elements of the feedstock may also be made up from a mixture of naturally occurring ores and/or, other components for example oxides and sulphides.

Almost any metal oxide may be capable of reduction using an electrolysis process and therefore may be used to make a feedstock according to an aspect of the invention. In particular, the feedstock may comprise one or more oxides selected from the group consisting of beryllium, boron, magnesium, aluminium, silicon, scandium, titanium, vanadium, chromium, manganese, iron, cobalt, nickel, copper, zinc, germanium, yttrium, zirconium, niobium, molybdenum, hafnium, tantalum, tungsten, and the lanthanides including lanthanum, cerium, praseodymium, neodymium, samarium, and the actinides including actinium, thorium, protactinium, uranium, neptunium and plutonium. The product of a reduction process may comprise any of these metals, or an alloy or intermetallic comprising any of these materials.

A particularly preferable element shape for forming the feedstock is a substantially ring-shaped or tube-shaped element. Such elements may be made, for example, by extrusion of a powder slurry. The elements may not form a continuous ring, but may be a split-ring, i.e., the elements may be a ring or tube having a "C-shaped" profile rather than a "O-shaped" profile.

Preferably the diameter of any such ring or tube (both "C-shaped" and "O-shaped" profiles) is substantially the same as the height of the ring or tube. This may allow the element to function as a randomly-packable element and may allow a number of layers of such elements to interlock, or randomly-stack together maintaining a predictable free space percentage. If the aspect ratio of a tube-shaped element was such that the diameter of the tube was much different to its height, then the elements may be prone to alignment and nesting, and this may alter the free space of a volume of such elements at different places or regions within a volume of the feedstock.

Ideally the aspect ratio (length:diameter) of rings, split-rings and tubes should be 1:1 but may vary slightly, for example 1:1 ± 0.5 (in other words an aspect ratio of between 0.5:1 and 1:0.5).

Advantageously the diameter of the ring or tube may be between 3mm and 20mm, preferably between 5mm and 10mm, preferably about 6mm or about 7mm.

In a second aspect, the invention provides the use of randomly-packable elements as a feedstock for a reduction reaction, in which the elements have between 35% and 90% free space per unit volume. Free space is as defined above in relation to the first aspect of the invention and does not include any porosity within the material forming each element.

In a third aspect, the invention provides a method of reducing a precursor material to form a reduced product. The method may comprise the steps of forming a solid feedstock from the precursor material, the feedstock comprising a plurality of elements shaped such that a volume of the feedstock has between 35% and 90% free space, arranging a layer of the feedstock having a predetermined thickness in contact with a cathode and a molten salt within an electrolytic cell, and applying a potential between an anode of the cell and the cathode sufficient to cause reduction of the feedstock.

Preferably the feedstock in the second and third aspects is any feedstock as described above.

The method is of particular benefit where the reduction is performed in an electrolytic cell having a cathode arrangement that allows contact with the feedstock to be maintained by gravity. Examples of such cathodes include a cathode having a tray-like or basket-like structure in which the feedstock can be arranged in contact with the cathode by pouring or dumping feedstock into the basket or onto the tray. A further example of a cathode structure may be where the electrolytic cell has a horizontally disposed cathode surface and the feedstock can be arranged in contact with the cathode by pouring or dumping the feedstock onto this surface to a predetermined depth.

An advantage of the use of a feedstock according to the invention in conjunction with such an electrolytic cell may be that the complicated and sometimes expensive operation of attaching each element or elements of a feedstock to a cathode may be eliminated. The feedstock may be arranged in the electrolytic cells simply by pouring or dumping it into the appropriate portion of the cell and, likewise, the reduced product of the electrolytic reduction may be removed from the cell by pouring out of the cell.

Preferably the molten salt is a halide salt comprising a group 1 or a group 2 metal, for example a calcium chloride salt or a lithium chloride salt. It may be particularly preferable that the molten salt further comprises a group 1 or group 2 metal oxide. Thus, in the example where the molten salt is a calcium chloride salt, the salt may further comprise a portion of calcium oxide dissolved within the salt. Likewise, if a lithium chloride salt is used, the salt may further comprise dissolved lithium oxide within the salt.

Mixed compositions of salts and oxides may also be used for the purposes of reducing the feedstock.

Some reduction processes may only operate when the molten salt or electrolyte used in the process comprises a metallic species (a reactive metal) that forms a more stable oxide than the metallic oxide or compound being reduced, i.e. the oxide or compound that forms the feedstock. Such information is readily available in the form of thermodynamic data, specifically Gibbs free energy data, and may be conveniently determined from a standard Ellingham diagram or predominance diagram or Gibbs free energy diagram. Thermodynamic data on oxide stability and Ellingham diagrams are available to, and understood by, electrochemists and extractive metallurgists (the skilled person in this case would be well aware of such data and information).

Thus, a preferred electrolyte for a reduction process may comprise a calcium salt. Calcium forms a more stable oxide than most other metals and may therefore act to facilitate reduction of any metal oxide that is less stable than calcium oxide. In other cases, salts containing other reactive metals may be used. For example, a reduction process according to any aspect of the invention described herein may be performed using a salt comprising lithium, sodium, potassium, rubidium, caesium, magnesium, calcium, strontium, barium, or yttrium. Chlorides or other salts may be used, including mixture of chlorides or other salts.

The method may additionally comprise a step of flowing molten salt over and/or through the feedstock. The continuous movement of molten salt over the surface of the feedstock during an electrolysis reaction may increase the efficiency of the reaction. The free space within the feedstock may advantageously allow a flow of molten salt to pass through the feedstock relatively uninhibited. This may, advantageously, prevent any portions of molten salt from stagnating within regions of the feedstock and stop the build up of reactive metal / calcium oxide. The free space may also provide multiple current flow paths through the feedstock. Random packing of the feedstock may result in a homogeneous distribution of free space through a volume of feedstock and, therefore, may mean that current can flow evenly throughout the feedstock. This is particularly important in a commercial process, to ensure that the same reaction conditions may be predictably and consistently applied to all regions of the feedstock.

In a fourth aspect, the invention provides a metallic random packing element. Random packing elements are commonly used in chemical processing, for example for packing distillation columns. The invention may advantageously provide a method of producing a metallic random packing element by the reduction of a non-metallic element in the shape of a random packing element. During the reduction of the non-metallic element, the element may retain its shape and thus form a product that is a metallic random packing element. Random packing particles or elements for use as column packing (for example in distillation columns) should be inert. It is also preferable that the material has low density, in order to reduce the mass of a column filled with the elements. Many metals and alloys may fulfil these criteria. For example, titanium and titanium alloys may be particularly suitable for use as a column packing material but are not currently used for the purpose due to expense. The invention may, thus, provide a means of efficiently producing such random packing elements.

The formation of a metallic random packing element by powder processing of a metal oxide or ceramic powder followed by electrolytic reduction may allow the formation of random packing elements having shapes that are difficult to form by other means, or formed from metals and/or from metal compositions not previously used or even considered for use as packing elements.

### Specific Embodiments of the Invention

Specific embodiments of the invention will now be described with reference to the Figures in which:
Figure 1 is a perspective illustration of a first three-dimensional element for making up a feedstock according to an aspect of the invention.
Figure 1A is an illustration of a feedstock comprising a plurality of three-dimensional elements as shown in Figure 1.
Figure 1B is an illustration showing the feedstock of Figure 1A after reduction to metal.
Figure 2 is a plan view of the element of Figure 1.
Figure 3 is a plan view of a second element for making up a feedstock according to an aspect of the invention.
Figure 4 is a schematic diagram of an electrolysis cell for reducing a feedstock according to an aspect of the invention.
Figure 5 is a schematic diagram of a bipolar electrolysis cell for reducing a feedstock according to an aspect of the invention.
Figure 6 illustrates a portion of the bipolar cell of Figure 5.
Figure 7a illustrates a perspective view of a third element suitable for making a feedstock according to the invention.
Figure 7b illustrates a side view of the element of Figure 7a.
Figure 7c illustrates a front view of the element of Figure 7a.
Figure 7d illustrates a plan view of the element of Figure 7a.
Figure 8a illustrates a perspective view of a fourth element suitable for making a feedstock according to the invention.
Figure 8b illustrates a side view of the element of Figure 8a.
Figure 8c illustrates a front view of the element of Figure 8a.
Figure 8d illustrates a plan view of the element of Figure 8a.

A specific embodiment of a feedstock and method of reducing the feedstock will now be described in the context of a feedstock for producing metallic titanium by the electrodeoxidation of titanium dioxide (TiO₂).

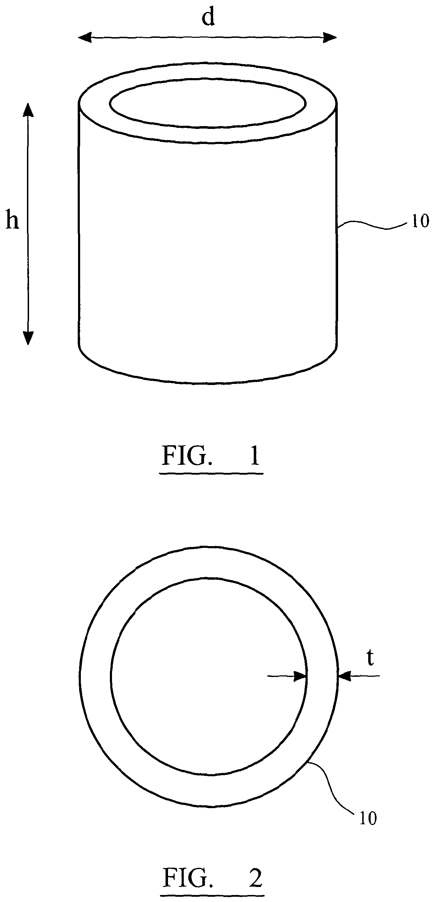

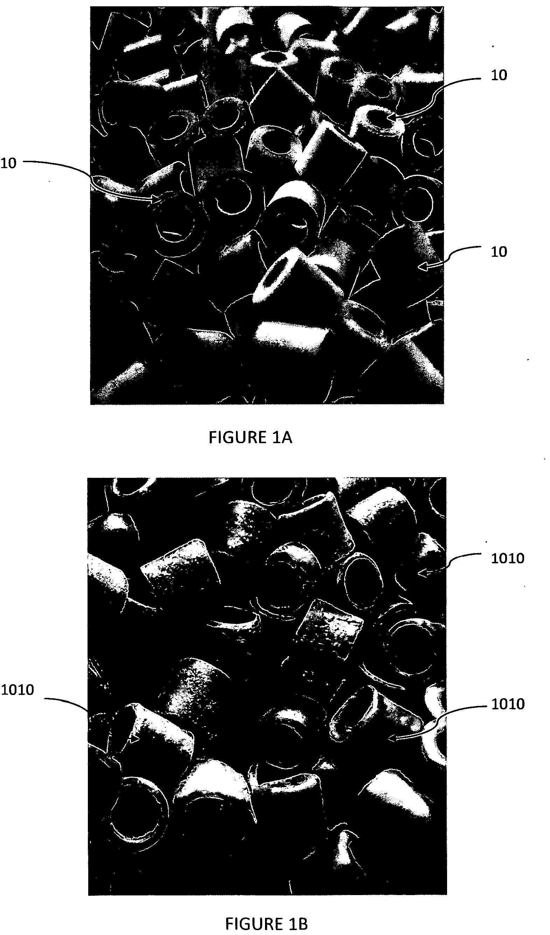

Figure 1 illustrates a single titanium dioxide element 10 forming part of a feedstock. The element is in the form of an annulus or ring having a height, or length, (marked as h in Figure 1) that is about 6mm ± 0.5mm and an outer diameter (d) that is about 6mm ± 1.0mm. The wall thickness of the element (t) is about 1mm ± 0.5mm. Thus the element is in the form of a ring having substantially the same height (length) and diameter. The weight of each element when made of TiO₂ is about 0.2g.

A feedstock according to the invention is made up by a plurality of such rings 10 (See Figure 1A), and the aspect ratio of the rings of approximately 1:1 gives the feedstock the property of random packing, i.e. a volume of the feedstock does not have any long range alignment.

The feedstock is made by extrusion of a titanium dioxide slurry. The slurry is formed by mixing titanium dioxide powder having a mean particle size (D₅₀) of 1µm and a binder. The slurry is extruded and sliced to form a plurality of element preforms and these preforms are then sintered at approximately 1050 ± 50 C for a period of about 4 hours to remove the binder and consolidate the preforms. The resulting elements consist of substantially pure titanium dioxide having a porosity of about 40%. That is, the material making up the body, or walls, of each element has porosity of about 40% .

A volume of one cubic metre of the elements has a surface area of approximately 1000m² (that is the surface area of the element not including any porosity that the walls of the element may have; i.e. the macroscopic topological surface). When its constituent elements are randomly packed, the number density of the elements in the feedstock is about 3,000,000 per m³, the feedstock has a free space (also termed free volume or voidage) of about 75% (i.e. the free volume is about 0.75m³ per m³ of feedstock). Free space of the feedstock does not include any porosity within the material making up the body of each element, as described above. In this specific case the elements of the feedstock are rings and the free space is a function of the height, outer diameter and wall thickness of the rings.

Many different shapes of element could be used to provide a feedstock having the desired free space per m³.

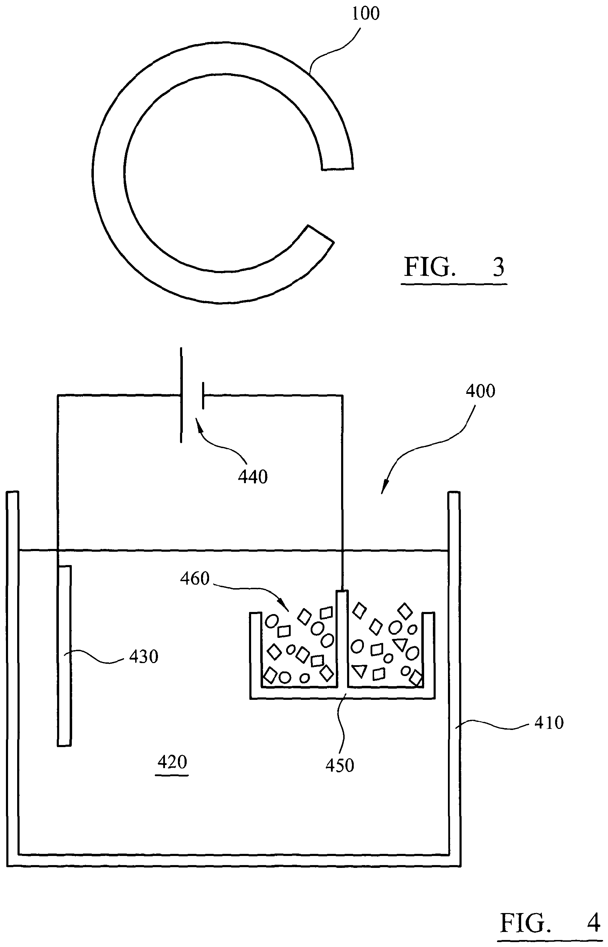

Figure 3 illustrates a plan view of an alternative element 100 that is in the form of a split ring. The height/length, diameter and wall thickness dimensions of this split ring, and therefore the aspect ratio, are the same as for the ring illustrated in Figures 1 and 2, the difference being that the ring, in plan view, is in the form of the letter "C".

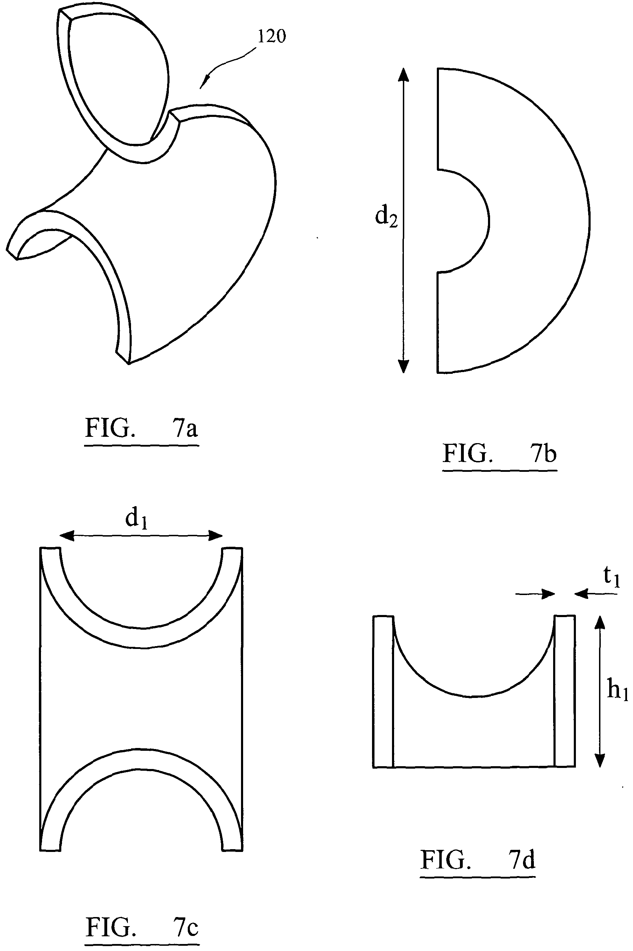

Figures 7a to 7d illustrate a further alternative element shape 120 for making up a feedstock according to an aspect of the invention. This element is in the form of a pseudo-semicircle. This complex shape may be defined by a first diameter (d₁) a second or outer diameter (d₂) and a wall thickness (t₁). The height (h₁) is half of the second diameter (d₂). As a specific example, for a feedstock formed from elements having a first diameter (d₁) of 12mm, a second diameter (d₂) of 20mm and a wall thickness (t₁) of 2mm, the specific surface area is about 650m² per m³, the number density of elements is about 610,000 per m³, and the free space of the feedstock is about 68% (i.e. the voidage is about 0.68m³ per m³ of feedstock).

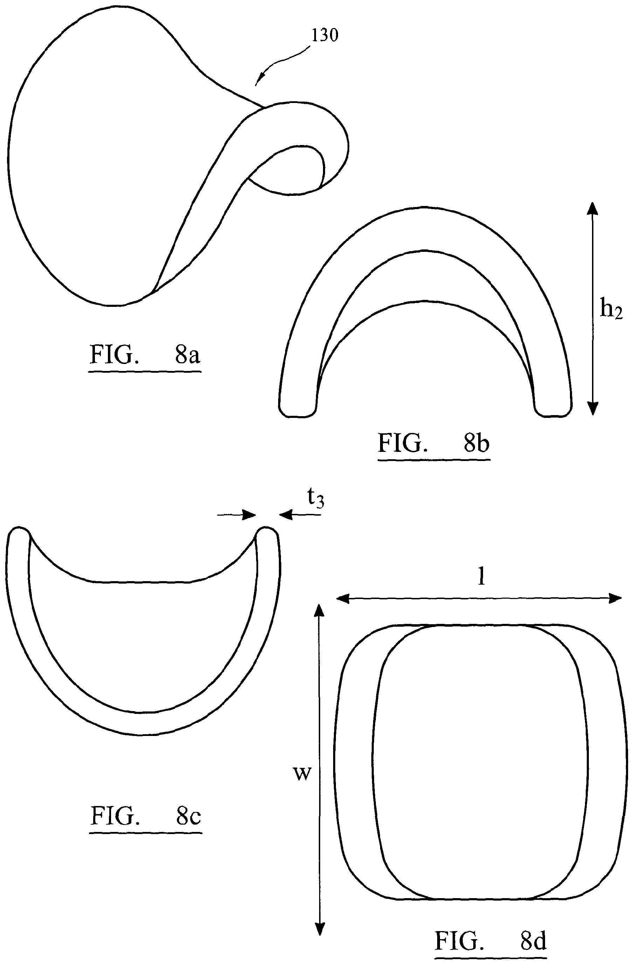

Figures 8a to 8d illustrate a further alternative element shape 130 for making up a feedstock according to an aspect of the invention. The element 130 is in the form of a saddle shape. The wall thickness (t₃) of the saddle shape is effectively the through-thickness of the material forming the saddle. Length (I) width (w) and height (h₂) of the saddle preferably have a ratio of approximately 1:1:1.

Where a saddle as illustrated in Figures 8a to 8d has width, length and depth of about 19mm, the surface area of a feedstock formed by the elements may be approximately 225m² per m³, the number density of particles may be about 84,000 per m³, and the free space of a volume of the feedstock may be about 58% (i.e. the free volume or voidage is about 0.58m³ per m³ of feedstock).

Although the specific embodiment described above refers to a feedstock made by a plurality of titanium dioxide elements, it is noted that the feedstock could be made from a plurality of elements of any composition that is reducible in an electrolytic cell. For example the feedstock could be made from other oxides such as tantalum oxide or niobium oxide, or from mixtures of oxides, or from a mixture of oxides and metals, or other compounds capable of being reduced for example sulphides. It may also be possible, for example, to produce feedstock elements directly from naturally occurring ores.

Where it is desired to produce titanium, the feedstock may be a titanate, for example a calcium titanate, and similarly where it is desired to produce tantalum metal, then the feedstock may be a tantalate, for example a calcium tantalate.

Figure 4 is a schematic illustration of an electrolytic cell for reducing a feedstock according to the invention. The cell illustrated in Figure 4 is used to reduce the titanium dioxide feedstock described above to titanium using the FFC Cambridge electro-decomposition process.

The cell 400 comprises a salt bath 410 containing molten calcium chloride 420 (CaCl₂ having CaO content up to 11 wt%). A carbon anode 430 is immersed in the molten salt melt and connected to a power supply 440. A basket-like cathode structure 450 is also coupled to the power supply. The basket-like cathode 450 forms a basket for receiving the feedstock.

A volume of feedstock is poured into the basket-like cathode structure 450 and is therefore brought into contact with the cathode structure at a number of points (between edges and corners of the feedstock and the surface of the cathode). Once the basket-like cathode has been loaded with a volume of the feedstock 460, the basket and feedstock can be lowered into the molten salt such that the feedstock, or at least a portion of the feedstock, is in contact with both the cathode structure and the molten salt.

In order to reduce the feedstock, a voltage is applied between the anode and the cathode sufficient to remove oxygen from the feedstock. The voltage is maintained such that oxygen is removed from the feedstock but calcium is not deposited on the cathode in metallic form.

It may be advantageous to control the cell voltage by reference to a reference electrode arranged in the cell. Use of a reference electrode is not essential, however.

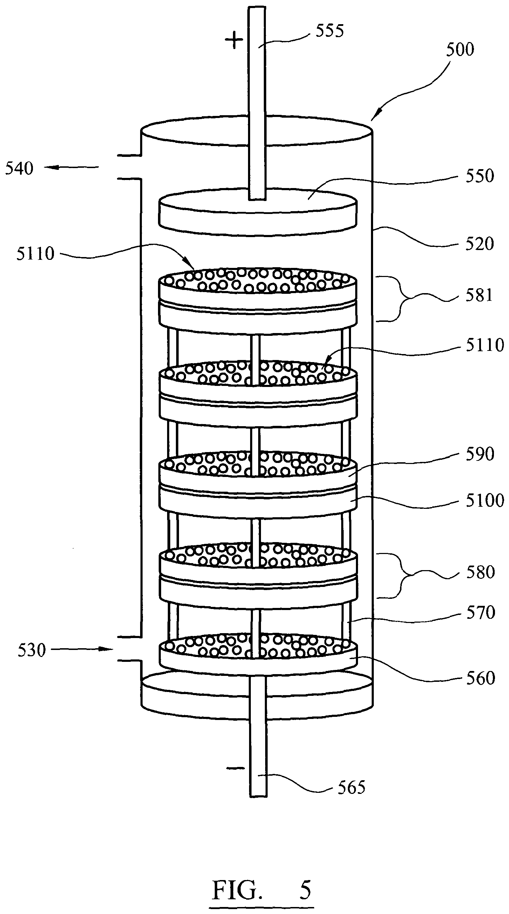

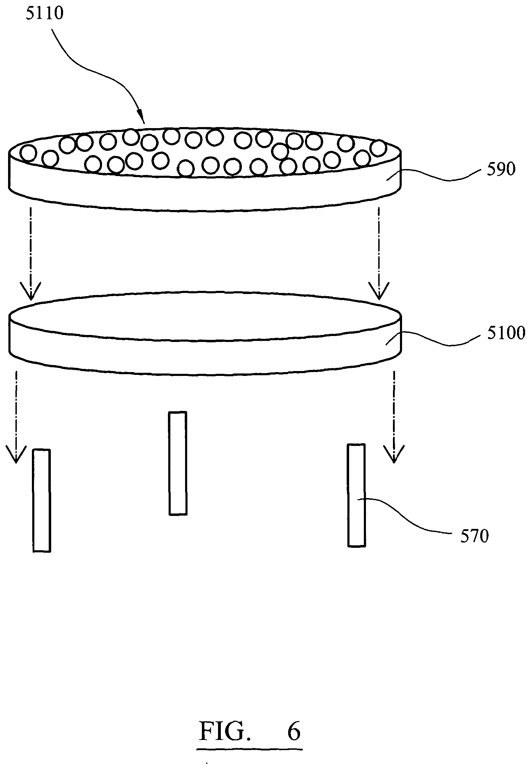

The feedstock according to the invention may be particularly advantageous when used in conjunction with an electrolytic cell having a substantially horizontally disposed cathode element, for example a cathode element in a bipolar cell. A description of such a cell is as follows, with reference to Figures 5 and 6.

Figure 5 is a schematic diagram of a bipolar cell suitable for performing an FFC type electro-reduction on a feedstock as described above. The apparatus 500 comprises a substantially cylindrical housing 520 having a circular base of 150cm diameter and a height of 300cm. The housing has walls made of stainless steel defining an internal cavity or space, and an inlet 530 and an outlet 540 for allowing molten salt to flow into and out of the housing. The housing walls may be made of any suitable material. Such materials may include carbon steels, stainless steels and nickel alloys. The molten salt inlet 530 is defined through a lower portion of the housing wall and the molten salt outlet 540 is defined through an upper portion of the housing wall. Thus, in use, molten salt flows into the housing at a low point and flows upwardly through the housing eventually passing out of the housing through the outlet.

The internal walls of the housing are clad with alumina to ensure that the internal surfaces of the housing are electrically insulating.

An anode 550 is disposed within an upper portion of the housing. The anode is a disc of carbon having a diameter of 100cm and a thickness of 5cm. The anode is coupled to an electricity supply via an electrical coupling 555 that extends through the wall of the housing.

A cathode 560 is disposed in a lower portion of the housing. The cathode is a circular plate an inert metal alloy, for example tantalum, molybdenum or tungsten having a diameter of 100cm. The choice of cathode material may be influenced by the type of feedstock being reduced. The reduced product preferably does not react with or substantially adhere to the cathode material under cell operating conditions. The cathode 560 is connected to an electricity supply by an electrical coupling 565 that extends through a lower portion of the housing wall. The circumference of the cathode is bounded by an upwardly extending rim forming a tray-like upper surface to the cathode.

The upper surface of the cathode 560 supports a number of electrically insulating separating members 570 that act to support a bipolar element 580 directly above the cathode. The separating members are columns of yttrium oxide or aluminium oxide having a height of 10cm. It is important that the separating members are electrically insulating and substantially inert in the operating conditions of the apparatus. They must also be able to support the weight of a cell stack comprising a plurality of bipolar elements. The separating members are spaced evenly around the circumference of the cathode and support the bipolar element 580 immediately above the cathode.

Each bipolar element 580 is formed from a composite structure having a cathodic upper portion 590 and an anodic lower portion 5100. In each case the anodic portion is a disc of carbon of 100cm diameter and 3cm thickness and the cathodic upper portion 590 is a circular metallic plate having diameter of 100cm and an upwardly extending peripheral rim or flange such that the upper portion of the cathodic portion 590 forms a tray.

The apparatus comprises a stack of ten such bipolar elements 580, each bipolar element supported vertically above the last by means of electrically insulating separating members 570. (For clarity only 4 bipolar elements are shown in the schematic illustration of Figure 5.) The apparatus can comprise as many bipolar elements as are required positioned within the housing and vertically spaced from each other between the anode and the cathode. Each bipolar element is electrically insulated from the others. The uppermost bipolar element 581 does not support any electrically insulating separating members and is positioned vertically below the terminal anode 550.

The upper surface of the terminal cathode 560 and the upper surfaces of each of the bipolar elements act as a support for the feedstock 5110. The feedstock 5110 is formed from a plurality of titanium dioxide rings, as described above and as illustrated in Figures 1 and 2. The feedstock is freely poured, or dumped, onto the upper surface of each cathodic support to a depth of 4cm. The upwardly extending rim or flange that bounds the upper surface of each cathodic element acts to retain the feedstock on the upper surface of each element to the required depth. When deposited on the cathodic surfaces, the feedstock has a substantially random arrangement of its constituent elements, and thus presents a relatively consistent free space irrespective of which cathode element the feedstock is in contact with.

A method of reducing the feedstock (i.e. the feedstock described above in relation to Figures 1 and 2) using a bipolar cell will now be described.

There may be a number of ways of loading an apparatus with the feedstock, and the following is exemplary only. The housing is opened, for instance by removing a lid or opening a hatch in the housing that allows access to the internal portion of the housing. A volume of feedstock is poured, or dumped, onto the terminal cathode disposed in the lower portion of the housing, such that the surface of the terminal cathode is covered with feedstock to a depth of 4cm. As the feedstock has height/length and diameter that are both 6mm +/- 0.5mm, the feedstock is about 7 to 8 layers thick at a depth of 4cm. The feedstock is prevented from rolling from the surface of the cathode by the rim bounding the upper surface of the cathode.

A bipolar element is then supported above the cathode by electrically insulating separating members 570 that rest on the upper surface of the cathode 560. A volume of feedstock is then poured onto the surface of the bipolar element until the upper surface of the bipolar element 580 is covered with feedstock to a depth of 4cm. As described in relation to the cathode 560, the feedstock is maintained on the upper surface of the bipolar element by an upwardly extending rim bounding the upper, cathodic, surface 590 of the bipolar element 580.

This process is repeated again for each bipolar element making up the bipolar cell stack. Each new bipolar element is supported in vertical separation from a lower bipolar element by means of electrically insulating separating members, and feedstock is applied to the surface of the bipolar element. When all of the bipolar elements have been arranged (for example ten vertically spaced bipolar elements making up a bipolar cell stack), the terminal anode 550 is arranged above the uppermost terminal bipolar element 581, and the housing is sealed, for example by replacing the lid or closing the access hatch.

Figure 6 illustrates the components of a unit cell of the bipolar cell stack. The unit cell consists of yttrium oxide electrically insulating separating members 570. These separating members are 10cm long. The lower, anodic portion of the bipolar element 5100 is a 3cm thick carbon disc or plate having a diameter of 100cm, and is supported on top of the separating members. Resting on top of the carbon anode portion 5100 is the upper or cathodic portion of the bipolar element 590 which is in the form of a titanium tray having a diameter of 100cm. The surface area of the tray is approximately 0.78m² and the titanium dioxide feedstock 5110 is supported on this surface.

A suitable molten salt for performing the electrolytic reduction of many different feedstock materials may comprise calcium chloride. In the specific example of a reduction of titanium dioxide, a preferred salt is calcium chloride containing between about 0.3 to 0.6% dissolved calcium oxide.

The salt is heated to a molten state in a separate crucible or reservoir (not shown) that is coupled to the housing by means of a molten salt circuit. The circuit comprises tubing or pipework made of graphite, glassy carbon or a suitable corrosion resistant metal alloy through which the molten salt can be made to flow, for example by means of a pump.

It is undesirable to pump molten salt at the working temperature (for example between 700°C and 1100°C) directly into the housing while the housing is at room temperature. Therefore, the housing is warmed first. Hot inert gas is passed through the housing by means of hot gas inlets and outlets (not shown) and the flow of hot gas through the housing heats up the internal portion of the housing and the elements contained within the internal portion of the housing. This process also has the effect of purging the cell of undesirable atmospheric oxygen and nitrogen. When the internal portion of the housing and the elements contained therein have reached a sufficient temperature, for example a temperature at or near to the molten salt temperature, valves in the molten salt flow circuit are opened, and molten salt is allowed to flow into the housing through inlet 530. Because the internal portion of the housing has been warmed there is no substantial freezing of the molten salt as it enters the housing, and the molten salt level rises, covering successive bipolar elements and the feedstock supported thereon. When the molten salt reaches the uppermost portion of the housing, it flows out of the outlet and back to the molten salt reservoir.

In an exemplary method of using the apparatus, a potential is applied between the terminal cathode and the terminal anode, such that the upper surfaces of the terminal cathode and each of the bipolar elements becomes cathodic. The potential at each cathodic surface is sufficient to cause reduction of the feedstock supported by each cathodic surface, preferably without causing deposition of calcium from the calcium chloride based molten salt. For example, to form a cathodic potential of about 2.5 volts on the surface of each of the bipolar elements, if there are ten such elements, requires a potential of between approximately 25 and 50 volts to be applied between the terminal cathode and terminal anode.

In an FFC electro-decomposition method for the reduction of an oxide feedstock in a calcium chloride salt, oxygen is removed from the feedstock without deposition of calcium from the molten salt. The mechanism for FFC reduction in a bipolar cell may be as follows.

Current is passed between the terminal cathode and terminal anode primarily by means of ionic transfer through the melt. For example, O²⁻ ions are removed from the feedstock supported on the terminal cathode by electro-deoxidation and are transported to the anodic portion 5100, of the bipolar element immediately above the terminal cathode. The reaction of the oxygen ions with the carbon anode results in the evolution of a mixture of gaseous carbon monoxide, carbon dioxide and oxygen.

Electrons transported through the melt by the O²⁻ ion are transferred to the carbon portion of the element and into the cathodic titanium portion of the element where they are available for the electro-decomposition reaction of the titanium dioxide supported on the upper portion of the bipolar element. The electro-decomposition reaction causes the removal of oxygen from the titanium dioxide in the form of an O²⁻ ion, and this ion is then transported to the next anode element immediately above in the stack.

Figure 1A illustrates a feedstock comprising a plurality of annular random packing elements 10 formed from titanium dioxide (each element being as described above with reference to Figure 1). By way of example, in a particular electrolytic reduction, this feedstock was dumped onto a planar cathode in an electrolysis cell and reduced using the FFC process as described herein. The resulting reduced feedstock is illustrated in Figure 1B. The reduced feedstock comprises a plurality of titanium elements 1010, each having substantially the same shape as the feedstock elements from which they were produced.

The reduced feedstock illustrated in Figure 1B may be further processed, for example by grinding the titanium elements into a powder, or by melting the titanium elements to form a billet. The elements of the reduced feedstock may be suitable, however, for use as column packing elements in the chemical industry without any significant further processing other than washing away any residual salt.

Reduction of the feedstock may be carried out using processes other than the FFC process. For example, electro-decomposition could be carried out using the higher voltage process as described in WO 03076690.

## Claims

1. A feedstock for reduction in an electrolytic cell comprising a plurality of three-dimensional elements, the elements shaped such that a volume of the feedstock has between 35% and 90% free space and each element is shaped as a randomly-packable element.

2. A feedstock according to claim 1 in which the feedstock is substantially resistant to nesting and/or orientation, and/or does not exhibit any long range order.

3. A feedstock according to claim 1 or 2 in which each element has a maximum wall thickness of less than 10mm and/or in which walls that form each element are porous.

4. A feedstock according to claim 3 in which each element has a wall thickness of between 0.5mm and 5mm and/or in which walls that form each element are porous and have a porosity of between 10% and 60%.

5. A feedstock according to any preceding claim in which the volume of the feedstock has between 50% and 80% free space and/or in which the surface area of a volume of the feedstock is between 2000 and 200m²/m³.

6. A feedstock according to any preceding claim for use in an electro-decomposition cell.

7. A feedstock according to claim 6 for electro-deoxidation of the feedstock, or in which the elements are formed from powder by a powder processing method, or in which the feedstock is formed from a compound between at least one metal species and a non-metal species.

8. A feedstock according to any preceding claim in which the elements are substantially ring-shaped, split ring-shaped, tube-shaped or saddle-shaped, and/or in which the feedstock comprises elements that are ring-shaped or tube-shaped in which the diameter of the ring or tube is between 3mm and 20mm, and/or in which the ratio of length or height to width or diameter of feedstock elements is between 0.5:1 and 1:0.5, and/or in which a substantially consistent fluid flow path and/or current flow path is defined throughout a volume of the feedstock.

9. A feedstock according to any preceding claim that is a dumped feedstock having between 35% and 90% free space.

10. Use of a feedstock according to any preceding claim as a feedstock in an electrolytic reduction reaction or in an electrolytic reduction reaction in a bipolar cell.

11. A method of reducing a precursor material to form a reduced product comprising the steps of;
forming a solid feedstock from the precursor material, the feedstock comprising a plurality of three-dimensional randomly-packable elements shaped such that a volume of the feedstock has between 35% and 90% free space,
arranging a layer of the feedstock having a predetermined thickness in contact with a cathode and molten salt in an electrolytic cell, the cell also comprising an anode,
applying a potential between the anode and the cathode sufficient to cause reduction of the feedstock.

12. A method according to claim 11 in which the feedstock is a feedstock as defined in any of claims 1 to 9, and/or in which the cathode has a basket-like or tray-like structure and the feedstock is arranged in the basket by pouring or dumping and/or in which the cathode has a horizontally disposed surface and the feedstock is arranged in contact with the cathode by pouring or dumping onto this surface.

13. A method according to any preceding method claim in which the molten salt is a halide salt comprising a group 1 or group 2 metal or a halide salt comprising a group 1 or group 2 metal and a group 1 or group 2 metal oxide, and/or further comprising the step of flowing of molten salt over the feedstock.

14. A method of making a metallic random packing element comprising the steps of forming a feedstock from a metallic oxide, the feedstock being formed from a plurality of elements having a random packing shape, placing the feedstock within a reduction apparatus, and reducing the feedstock to metal, the elements of the feedstock substantially retaining their shape during reduction.

15. A metallic random packing element formed by the electrolytic reduction of a feedstock as defined in any of claims 1 to 9.

## Patentansprüche

1. Ausgangsmaterial zur Reduktion in einer Elektrolysezelle, das eine Vielzahl von dreidimensionalen Elementen umfasst, wobei die Elemente so geformt sind, dass ein Volumen des Ausgangsmaterials zwischen 35 % und 90 % Freiraum hat und jedes Element als ein zufällig packbares Element geformt ist.

2. Ausgangsmaterial nach Anspruch 1, bei dem das Ausgangsmaterial im Wesentlichen gegen Nesten und/oder Ausrichtung beständig ist und/oder keine Fernordnung aufweist.

3. Ausgangsmaterial nach Anspruch 1 oder 2, bei dem jedes Element eine maximale Wandstärke von weniger als 10 mm hat und/oder bei dem Wände, die jedes Element bilden, porös sind.

4. Ausgangsmaterial nach Anspruch 3, bei dem jedes Element eine Wandstärke zwischen 0,5 mm und 5 mm hat und/oder bei dem Wände, die jedes Element bilden, porös sind und eine Porosität zwischen 10 % und 60 % haben.

5. Ausgangsmaterial nach einem der vorhergehenden Ansprüche, bei dem das Volumen des Ausgangsmaterials zwischen 50 % und 80 % Freiraum hat und/oder bei dem die volumenbezogene Oberfläche des Ausgangsmaterials zwischen 2000 und 200 m²/m³ ist.

6. Ausgangsmaterial nach einem der vorhergehenden Ansprüche zur Verwendung in einer Elektro-Zersetzungszelle.

7. Ausgangsmaterial nach Anspruch 6 für die Elektro-Desoxidation des Ausgangsmaterials oder bei dem die Elemente durch ein Pulververarbeitungsverfahren aus Pulver gebildet werden oder bei dem das Ausgangsmaterial aus einer Verbindung zwischen wenigstens einer Metallart und einer Nichtmetallart gebildet wird.

8. Ausgangsmaterial nach einem der vorhergehenden Ansprüche, bei dem die Elemente im Wesentlichen ringförmig, spaltringförmig, röhrenförmig oder sattelförmig sind und/oder bei dem das Ausgangsmaterial Elemente umfasst, die ringförmig oder röhrenförmig sind, wobei der Durchmesser des Rings oder der Röhre zwischen 3 mm und 20 mm ist, und/oder bei dem das Verhältnis von Länge oder Höhe zu Breite oder Durchmesser von Ausgangsmaterialelementen zwischen 0,5:1 und 1:0,5 ist und/oder bei dem ein im Wesentlichen durchgängiger Fluidfließweg und/oder Stromfließweg durchgehend durch ein Volumen des Ausgangsmaterials definiert ist.

9. Ausgangsmaterial nach einem der vorhergehenden Ansprüche, das ein geschüttetes Ausgangsmaterial mit zwischen 35 % und 90 % Freiraum ist.

10. Verwendung eines Ausgangsmaterials nach einem der vorhergehenden Ansprüche als ein Ausgangsmaterial in einer elektrolytischen Reduktionsreaktion oder in einer elektrolytischen Reduktionsreaktion in einer bipolaren Zelle.

11. Verfahren zum Reduzieren eines Präkursormaterials zum Bilden eines reduzierten Produkts, umfassend die folgenden Schritte:
Bilden eines festen Ausgangsmaterials aus dem Präkursormaterial, wobei das Ausgangsmaterial eine Vielzahl von dreidimensionalen, zufällig packbaren Elementen umfasst, die so geformt sind, dass ein Volumen des Ausgangsmaterials zwischen 35 % und 90 % Freiraum hat,
Anordnen einer Schicht des Ausgangsmaterials, die eine vorbestimmte Dicke hat, in Kontakt mit einer Kathode und einer Salzschmelze in einer Elektrolysezelle, wobei die Zelle auch eine Anode umfasst,
Anlegen eines Potentials zwischen der Anode und der Kathode, das ausreicht, um die Reduktion des Ausgangsmaterials zu verursachen.

12. Verfahren nach Anspruch 11, bei dem das Ausgangsmaterial ein Ausgangsmaterial nach einem der Ansprüche 1 bis 9 ist und/oder bei dem die Kathode eine korbähnliche oder schalenähnliche Struktur hat und das Ausgangsmaterial durch Gießen oder Schütten in dem Korb angeordnet wird und/oder bei dem die Kathode eine horizontal angeordnete Oberfläche hat und das Ausgangsmaterial durch Gießen oder Schütten auf diese Oberfläche mit der Kathode in Kontakt angeordnet wird.

13. Verfahren nach einem der vorhergehenden Verfahrensansprüche, bei dem die Salzschmelze ein Metallhalogenidsalz ist, umfassend ein Metall der Gruppe 1 oder der Gruppe 2, oder ein Metallhalogenidsalz, umfassend ein Metall der Gruppe 1 oder der Gruppe 2 und ein Metalloxid der Gruppe 1 oder der Gruppe 2, und/oder ferner umfassend den Schritt des Fließens von Salzschmelze über das Ausgangsmaterial.

14. Verfahren zum Herstellen eines metallischen zufällig packenden Elements, umfassend die Schritte des Bildens eines Ausgangsmaterials aus einem Metalloxid, wobei das Ausgangsmaterial aus einer Vielzahl von Elementen mit zufälliger Packform gebildet wird, Ablegen des Ausgangsmaterials in einer Reduktionsvorrichtung und Reduzieren des Ausgangsmaterials zu Metall, wobei die Elemente des Ausgangsmaterials ihre Form während der Reduktion im Wesentlichen behalten.

15. Metallisches zufällig packendes Element, das durch die elektrolytische Reduktion eines Ausgangsmaterials nach einem der Ansprüche 1 bis 9 gebildet wird.

## Revendications

1. Charge d'alimentation destinée à être réduite dans une cellule électrolytique comprenant une pluralité d'éléments tridimensionnels, les éléments étant conformés de telle sorte qu'un volume de la charge d'alimentation présente entre 35 % et 90 % d'espace libre et chaque élément étant conformé en tant qu'élément empilable de manière aléatoire

2. Charge d'alimentation selon la revendication 1, la charge d'alimentation résistant sensiblement à un emboîtement et/ou une orientation, et/ou ne présentant pas d'ordre sur une longue distance.

3. Charge d'alimentation selon la revendication 1 ou 2 dans laquelle chaque élément a une épaisseur de paroi maximale de moins de 10 mm et/ou dans laquelle les parois qui forment chaque élément sont poreuses.

4. Charge d'alimentation selon la revendication 3 dans laquelle chaque élément a une épaisseur de paroi entre 0,5 mm et 5mm et/ou dans laquelle les parois qui forment chaque élément sont poreuses et ont une porosité entre 10 % et 60 %.

5. Charge d'alimentation selon n'importe quelle revendication précédente dans laquelle le volume de la charge d'alimentation présente entre 50 % et 80 % d'espace libre et/ou dans laquelle la superficie d'un volume de la charge d'alimentation est comprise entre 2000 et 200 m²/m³.

6. Charge d'alimentation selon n'importe quelle revendication précédente destinée à être utilisée dans une cellule d'électro-décomposition.

7. Charge d'alimentation selon la revendication 6 destinée à une désoxydation électrolytique de la charge d'alimentation, ou dans laquelle les éléments sont formés à partir d'une poudre par un procédé de traitement de poudre, ou la charge d'alimentation étant formée d'un composé entre au moins une espèce métallique et une espèce non métallique.

8. Charge d'alimentation selon n'importe quelle revendication précédente dans laquelle les éléments sont sensiblement en forme d'anneau, en forme d'anneau fendu, en forme de tube, ou en forme de selle, et/ou la charge d'alimentation comprenant des éléments en forme d'anneau ou en forme de tube dont le diamètre d'anneau ou de tube est compris entre 3 mm et 20 mm, et/ou dans lequel le rapport de la longueur ou de la hauteur sur la largeur ou le diamètre des éléments de la charge d'alimentation est compris entre 5:1 et 1:0,5, et/ou dans laquelle un trajet d'écoulement de fluide et/ou un trajet d'écoulement de courant sensiblement cohérent est défini à travers un volume de la charge d'alimentation.

9. Charge d'alimentation selon n'importe quelle revendication précédente consistant en une charge d'alimentation qui est une charge d'alimentation déchargée présentant entre 35 % et 90 % d'espace libre.

10. Utilisation d'une charge d'alimentation selon n'importe quelle revendication précédente en tant que charge d'alimentation dans une réaction de réduction électrolytique ou dans une réaction de réduction électrolytique dans une cellule bipolaire.

11. Procédé de réduction d'un matériau précurseur pour former un produit réduit comprenant les étapes suivantes :
la formation d'une charge d'alimentation solide à partir du matériau précurseur, la charge d'alimentation comprenant une pluralité d'éléments tridimensionnels empilables de manière aléatoire conformés de telle sorte qu'un volume de la charge d'alimentation présente entre 35 % et 90 % d'espace libre,
la disposition d'une couche de la charge d'alimentation d'une épaisseur prédéterminée en contact avec une cathode et un sel fondu dans une cellule électrolytique, la cellule comprenant également une anode,
l'application entre l'anode et la cathode d'un potentiel suffisant pour entraîner la réduction de la charge d'alimentation.

12. Procédé selon la revendication 11 dans lequel la charge d'alimentation est une charge d'alimentation telle que définie dans l'une quelconque des revendications 1 à 9, et/ou dans lequel la cathode a une structure en forme de panier ou de plateau et la charge d'alimentation est disposée dans le panier par coulée ou décharge et/ou dans lequel la cathode présente une surface disposée horizontalement et la charge d'alimentation est disposée en contact avec la cathode par coulée ou décharge sur cette surface.

13. Procédé selon n'importe quelle revendication de procédé précédente dans lequel le sel fondu est un halogénure comprenant un métal de groupe 1 ou de groupe 2 ou un halogénure comprenant un métal de groupe 1 ou de groupe 2 et un oxyde métallique de groupe 1 ou de groupe 2, et/ou comprenant en outre l'étape d'écoulement du sel fondu par-dessus la charge d'alimentation.

14. Procédé de réalisation d'un élément métallique empilable de manière aléatoire comprenant l'étape de formation d'une charge d'alimentation à partir d'un oxyde métallique, la charge d'alimentation étant formée à partir d'une pluralité d'éléments ayant une forme empilable aléatoire, le placement de la charge d'alimentation dans un appareil de réduction, et la réduction de la charge d'alimentation en métal, les éléments de la charge d'alimentation conservant sensiblement leur forme durant la réduction.

15. Elément métallique empilable de manière aléatoire formé par la réduction électrolytique d'une charge d'alimentation selon l'une quelconque des revendications 1 à 9.
